# EUROPEAN PATENT SPECIFICATION

(11) **EP 2 237 152 B1**
(45) Date of publication and mention of the grant of the patent: **25.04.2018**
(21) Application number: 10157938.1
(22) Date of filing: 26.03.2010
(51) Int. Cl.: G06F 21/62, G06F 9/445

(54) **User terminal apparatus and control method thereof, as well as program**
Benutzerendgerätvorrichtung und Steuerverfahren dafür, sowie Programm
Appareil à terminal utilisateur et son procédé de commande ainsi que programme

(30) Priority: 31.03.2009 JP 2009084407
(43) Date of publication of application: 06.10.2010
(73) Proprietor: Hitachi Software Engineering Co., Ltd., Shinagawa-ku Tokyo 140-0002 (JP)
(72) Inventor: Nakayama, Koji, Tokyo 140-0002 (JP)
(74) Representative: Liesegang, Eva

(56) References cited:
- JP-A- 2007 164 652
- JP-A- 2008 059 501
- US-A1- 2005 027 957

## Description

### BACKGROUND OF THE INVENTION

### Field of the Invention

The present invention relates to a user terminal apparatus and a control method thereof, as well as a program, and more particularly, to file access control of a user terminal in a thin client system which aggregates user data in a file server by controlling writing into a secondary storage device of the user terminal and controlling writing out to an external storage medium, so as to realize prevention of loss and leakage of confidential information.

### Background Art

In recent years, a thin client system has been invented as a system which prevents important data kept in a file server from being spread from a user terminal. The thin client system generally uses a terminal which is not equipped with a nonvolatile secondary storage device within the terminal (diskless PC). However, there is also a system which uses a PC (personal computer) provided with a write-controlled secondary storage device, as a thin client terminal.

For example, in JP Patent Publication (Kokai) No. 2007-172063, in a terminal apparatus having a secondary storage device, if a write from an application to the secondary storage device occurs, the write is redirected onto a primary storage device (cache memory), and thereby, the write to the secondary storage device is limited, and the terminal apparatus which does not have a secondary storage is realized in a pseudo manner.

In comparison with a case of using the diskless PC, in a case of using the PC provided with the write-controlled secondary storage device as a thin client terminal apparatus, there is merit that a cost of infrastructure construction and the like can be reduced because of a low load on a server side. According to this system, the important data kept in the file server can be prevented from being spread, and in addition, inappropriate changes of OS setting or installation of applications by a user can also be prevented.

On the other hand, the system disclosed in JP Patent Publication (Kokai) No. 2007-172063 cannot save system revision data such as an OS patch in the secondary storage device, and thus the system cannot be kept up to date.

In contrast to this, as a system which can save only the system revision data in the secondary storage device of the user terminal, such a system as disclosed in JP Patent Publication (Kokai) No. 2008-59501 has been proposed. In JP Patent Publication (Kokai) No. 2008-59501, two filter devices, that is, a write-enabled filter device and a write-disabled filter device are generated beneath the file system. Then, a file access control driver which is a filter driver above the file system senses a write-disabled file access and redirects the write-disabled file access to the write-disabled filter device. Thereby, save control per file folder is realized for the write to the secondary storage device. With this means, only the system revision data can be saved in the secondary storage device of the user terminal apparatus, and the system can be kept up to date.

United States patent application US 2005/0027957 A1 discloses a method and system of protecting memory locations in an embedded system using a write filter. The write filter intercepts writes to protected memory locations and stores the writes in a cache.

### SUMMARY OF THE INVENTION

However, in order to enable the OS patch (system revision) data, this OS patch data must be previously reflected in the secondary storage device. In addition, in the system of JP Patent Publication (Kokai) No. 2008-59501, the system needs to be restarted in order to reflect the OS patch data in the secondary storage device, and there is a problem in that the system revision data such as the OS patch cannot be enabled in real time. This problem is caused because a volume device used in a case where a write-disabled file which operates locally is referred to, is different from a volume device to which the OS patch has been written. Moreover, there is no control related to writing of data for which a common file should not be used among processes, such as a configuration file of the application. Therefore, a security problem is also considered.

The present invention has been made in view of the above situation, and provides a technique in which, in a thin client terminal apparatus, the system revision data such as the OS patch which is locally saved can be enabled in real time, data which should not be shared among a plurality of processes, such as the configuration file of the application, can be appropriately saved, and data which should not remain in the terminal can be volatilized after shutdown.
The present invention provides a user terminal apparatus according to claim 1 and a control method according to claim 6. Preferred embodiments are defined in the dependent claims.

In order to solve the above described problems, for example, a mirror volume B of a volume A (an actual volume on the secondary storage device) is created when a PC is started, and a write-disabled process is caused to execute read/write processes only for the volume A, and a write-enabled process is caused to read from and write to only the mirror volume B. Moreover, the system configuration data such as the OS patch is written to both the volume A and the mirror volume B so that latest system configuration data can be handled from both the write-disabled process and the write-enabled process. At this time, a section which redirects all write processes for the volume A and the mirror volume B onto a memory is used to cache all the write processes for the volume A and the mirror volume B, on the memory, and only the cache of the mirror volume B is written to the secondary storage device at a time of the shutdown.

In other words, a user terminal apparatus according to the present invention includes a secondary storage device, a cache memory, a file access control unit (a file access control module) which judges a class of an I/O request to the secondary storage device from an application, and first and second redirection processing units (a volume filter device and a shadow volume device) which redirect the I/O request. If the file access control unit judges that the I/O request from the application is a double-write-enabled process and is a write request, the file access control unit transfers the I/O request to the first and second redirection processing units. Then, the first and second redirection processing units write data corresponding to the I/O request, into the cache memory, respectively. Examples of the application which issues the I/O request that is the double-write-enabled process include system revision data including an OS patch. It should be noted that, when the user terminal apparatus is shut down, the second redirection processing unit writes the data written to the cache memory by the second redirection processing unit, into the secondary storage device. Thereby, the system revision data is finally reflected in the user terminal apparatus.

On the other hand, if the file access control unit judges that the I/O request from the application is the double-write-enabled process, and is a request other than the write request, the file access control unit transfers the I/O request to the second redirection processing unit. Then, the second redirection processing unit reads data corresponding to the I/O request, from the cache memory.

Moreover, if the file access control unit judges that the I/O request from the application is riot the double-write-enabled process but a write-enabled process, and is the write request, the file access control unit transfers the I/O request to the second redirection processing unit. Then, only the second redirection processing unit writes data corresponding to the I/O request which is the write-enabled process and is the write request, into the cache memory. On the other hand, if the file access control unit judges that the I/O request from the application is not the double-write-enabled process but the write-enabled process, and is a request other than the write request, the file access control unit transfers the I/O request to the second redirection processing unit. Then, the second redirection processing unit reads data corresponding to the I/O request which is the write-enabled process and is the request other than the write request, from the cache memory.

Furthermore, if the file access control unit judges that the I/O request from the application is a write-disabled process and is the write request, the file access control unit transfers the I/O request to the first redirection processing unit. Then, only the first redirection processing unit writes data corresponding to the I/O request which is the write-disabled process and is the write request, into the cache memory. On the other hand, if the file access control unit judges that the I/O request from the application is the write-disabled process and is a request other than the write request, the file access control unit transfers the I/O request to the first redirection processing unit. Then, the first redirection processing unit reads data corresponding to the I/O request which is the write-disabled process and is the request other than the write request, from the cache memory. Examples of the application which issues the I/O request that is the write-disabled process include an application program which creates and edits confidential data.

Further characteristics of the present invention will be apparent from the following best mode for carrying out the invention and the accompanying drawings.

According to the present invention, the system revision data such as the OS patch can be enabled for all the processes including the write-enabled process and the write-disabled process, in real time. Moreover, during a period from when the PC is started until when the PC is shut down, the file, for example, such as setting or configuration data unique to the application, can be isolated between the write-enabled process and the write-disabled process, and the data can be securely managed.

### BRIEF DESCRIPTION OF THE DRAWINGS

FIG. 1 is a diagram showing a schematic configuration of a thin client system according to an embodiment of the present invention.
FIG. 2 is a diagram showing an internal configuration of a user terminal.
FIG. 3 is a flowchart for explaining operations of a file access control module.
FIG. 4 is a flowchart for explaining operations of a write control module.
FIG. 5 is a flowchart for explaining operations at a time of start.
FIG. 6 is a flowchart for explaining operations at a time of shutdown.
FIG. 7 is a diagram showing an example of an application control file.

### DESCRIPTION OF SYMBOLS

101 ... user terminal
102 ... file server
103 ... network
104 ... OS
105 ... application
106 ... file access control module
107 ... write control module
108 ... device control module
109 ... application control file
110 ... secondary storage device
111 ... confidential data

### DETAILED DESCRIPTION OF THE PREFERRED EMBODIMENTS

The present invention relates to file access control of a user terminal in a thin client system which aggregates user data in a file server by controlling writing into a secondary storage device of the user terminal and controlling writing out to an external storage medium, so as to realize prevention of loss and leakage of confidential information.

Hereinafter, an embodiment of the present invention will be described with reference to the accompanying drawings. However, it should be noted that the present embodiment is merely an example for realizing the present invention, and does not limit the technical scope of the present invention. Moreover, the same reference numeral is assigned to a common component in each figure.

### <Configuration of Information Processing System>

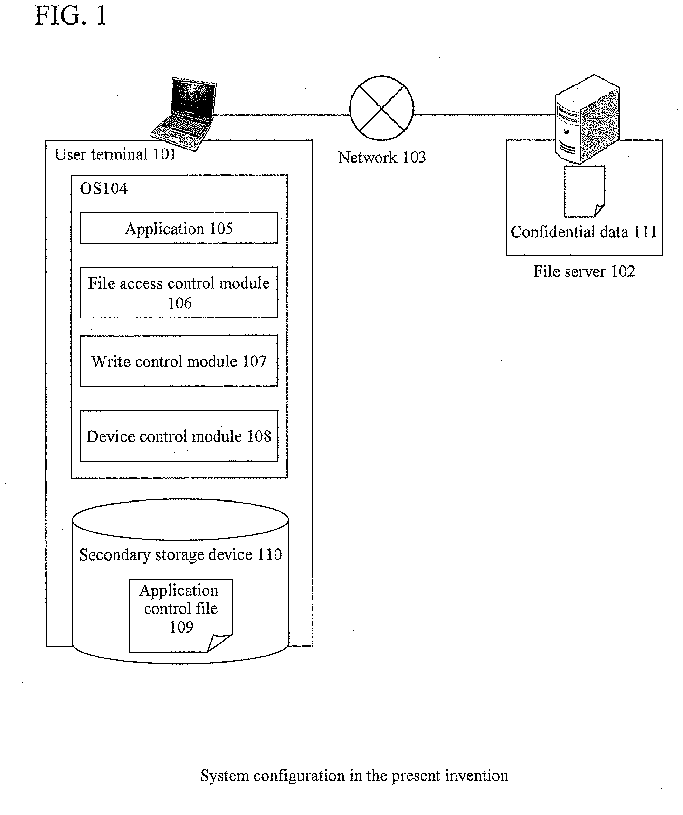

FIG. 1 is a diagram showing a schematic configuration of an information processing system according to the embodiment of the present invention. This information processing system includes a user terminal 101 and a file server 102, which are connected to each other via a network 103. It should be noted that, here, the network 103 can be realized by using a local area network (a network which is commonly known as a LAN, a wide area network (WAN), a peer-to-peer network or the like). Moreover, the user terminal 101 is an ordinary PC including a CPU, a primary storage device, a network device, an input/output device and a secondary storage device, and a form of portability or the like is not limited.

On the user terminal 101, an OS 104, an application 105 such as an application for creating a document and a form, a browser or the like, a file access control module 106, a write control module 107, and a device control module 108 are installed. Moreover, an application control file 109 is stored in a secondary storage device 110. Furthermore, although not shown in FIG. 1, the user terminal 101 includes a control unit (CPU), a memory, a network interface, an input/output device (a keyboard, a display, a speaker and the like) and the like.

The file server 102 is an ordinary file server which includes a CPU, a primary storage device, a network device, an input/output device, a secondary storage device and the like (not shown in FIG. 1), and can connect to the user terminal 101 to transfer a file, and can save confidential data 111 which has been created and edited by the application 105 on the user terminal 101.

In the user terminal 101, the device control module 108 includes a function which senses an external storage medium such as a USB and controls writing out to the external storage medium. In the sensing of the external storage medium, a function of the OS is used to sense an external device, and the writing out is controlled by a section which disables accesses to the device or redirects the write to the device, onto the memory, or the like. According to this function, the confidential data on the file server is prevented from being saved in the external device via the user terminal, and thus, the aggregation of the data is enabled and the leakage of the information can be prevented.

### <Internal Configuration of User Terminal and I/O Process Flow>

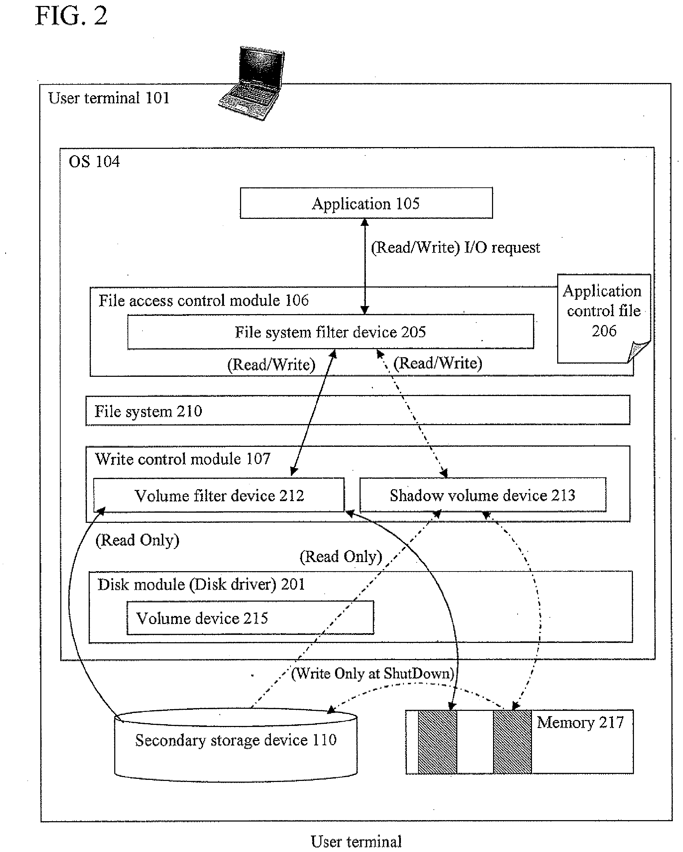

FIG. 2 is a diagram showing an internal configuration of the user terminal 101 including OS components in detail. Directed lines of FIG. 2 indicate flows of I/O requests requested to the secondary storage device by programs such as the application and an OS module (for easy understanding of the description, hereinafter, the program which performs the write to the secondary storage device is referred to as just "application", not only in a case of application software for document creation and the like, but also in a case of the OS module and the like. This "application" also includes an application for system revision such as, for example, Windows (registered trademark) Update.) (actually, I/O requests other than Read/Write also exist, but are omitted).

On the user terminal 101, if the application 105 has issued the I/O request, a write process is branched into three types in layers below the file access control module 106. A first type is a write process with only a solid line flow described in FIG. 2. A second type is a write process with only a dashed line flow described in FIG. 2. A third type is a write process with both the solid line flow and the dashed line flow described in FIG. 2. It should be noted that solid lines of FIG. 2 indicate the I/O request in a case where the I/O request has been issued mainly by the application 105, and dashed lines indicate the I/O request issued by the file access control module 106.

The file access control module 106 includes a function which creates a file system filter device 205 that can be attached to a file system 210 mounted in a volume device 215 and can filter I/O to the secondary storage device 110, which is issued by the application 105.

Moreover, if the I/O to the secondary storage device 110, which has been issued by the application 105, is a write request, the file access control module 106 determines whether the application which is a write requester is a "double-write-enabled" application, a "write-enabled" application, or a "write-disabled" application, with reference to an application control file 206. In a case of the write performed by the "double-write-enabled" application, data is replicated and transmitted to both a volume filter device 212 and a shadow volume device 213. Moreover, in a case of the write performed by the "write-enabled" application, the file access control module 106 transmits the data only to the shadow volume device 213. Furthermore, in a case of the write performed by the "write-disabled" application, the file access control module 106 transmits the data only to the volume filter device 212.

It should be noted that examples of the "double-write-enabled" application include update programs of the OS and the application software. These programs are typically provided by vendors of the OS and the application. Moreover, examples of the "write-enabled" application include an application installer. If the application is not used immediately after installation, the application is regarded as the "write-enabled" application, and the write is performed. Thereby, an installation process is performed in the background, and the installation is completed without changing a use environment of the PC. Furthermore, examples of the "write-disabled" program include such an application program which creates and edits the confidential data, that is, generally, an application program for creating and editing the document and the form. According to this system, an effect of improving a security function is obtained due to an effect of separating the data for each process.

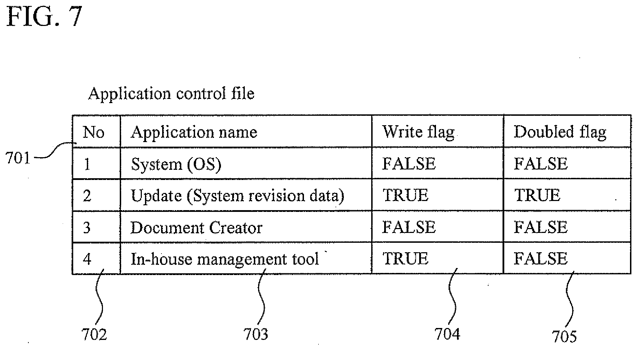

As a method of sorting the programs which are the write requesters, the sort is enabled by previously installing the application control file 206 (for example, FIG. 7 (Table 1)) in the user terminal 101.

The application control file 206 is a file in a list format including a set of an application name 703, a write-disabled/enabled flag 704, and a double-write-disabled/enabled flag (doubled flag) 705. An ordinary OS can obtain an execution process name and a process ID from the application name. Consequently, the process name and the process ID of the application operating on the user terminal can be obtained by reading this list.

Moreover, if the file access control module 106 has been previously implemented as a filter driver of the file system, when a write process request is obtained by the file system filter device 205, the process name and the process ID of the requester can be obtained. It can be determined whether the application which performs the write process is the "double-write-enabled" application, the "write-enabled" application, or the "write-disabled" application, by comparison of the process name and the process ID obtained as described above.

It should be noted that although the application control file 206 has been appropriately created according to a system policy of the user terminal and previously installed by a system administrator, the application control file 206 is a file which can also be revised simultaneously with an update. Moreover, if an ordinary user is allowed to install the application, a malicious application (for the purpose of illegal acts) might be installed. Therefore, an installation task is preferably performed by the administrator.

The write control module 107 includes a function which creates two devices, that is, the volume filter device 212 which can be attached (caused to one-to-one correspond) to the volume device 215 and can filter the I/O to the secondary storage device 110 from the application 105, and the shadow volume device 213. It should be noted that, here, the write control module 107 is described as a type of a filter driver of a disk driver, while a section which realizes the write control module 107 may be a method other than that described herein. In the write control module 107, an I/O create function for creating the volume filter device 212 and the shadow volume device 213 is defined.

The volume filter device 212 is an object which filters the I/O request to the volume device 215, and includes a function which is attached to the volume device 215 of the secondary storage device 110, redirects and caches written data onto a memory 217. Here, "attach" is used as an example of a section which obtains the I/O request if the application 105 has issued the I/O request to the secondary storage device 110. A method thereof is not limited to a method based on "attach" if the I/O data issued to a volume by an arbitrary program can be obtained.

The shadow volume device 213 includes a function which caches data for which the write to the shadow volume device 213 itself is instructed, on the memory 217, and is not attached to the volume device 215 of the secondary storage device 110. However, the shadow volume device 213 recognizes existence of the volume device 215, and data cached to the volume device 215 by the shadow volume device 213 can be written to the secondary storage device at a time of shutdown. It should be noted that the write request to the shadow volume device 213 is only issued by the file access control module 106. The shadow volume device 213 is different from the volume filter device 212 in that the shadow volume device 213 writes the data within the memory 217, into the secondary storage device 110 at the time of shutdown of the user terminal 101. Typically, only the volume filter device 212 is provided, and provision of the shadow volume device 213 is one of characteristics of the present invention.

According to the present invention, the volume filter device 212 and the shadow volume device 213 are provided, and double-write-enabling is executed for the update programs of the OS and the application software. Thereby, when these updated applications are used, the user terminal 101 does not need to be restarted.

### <Operations of File Access Control Module>

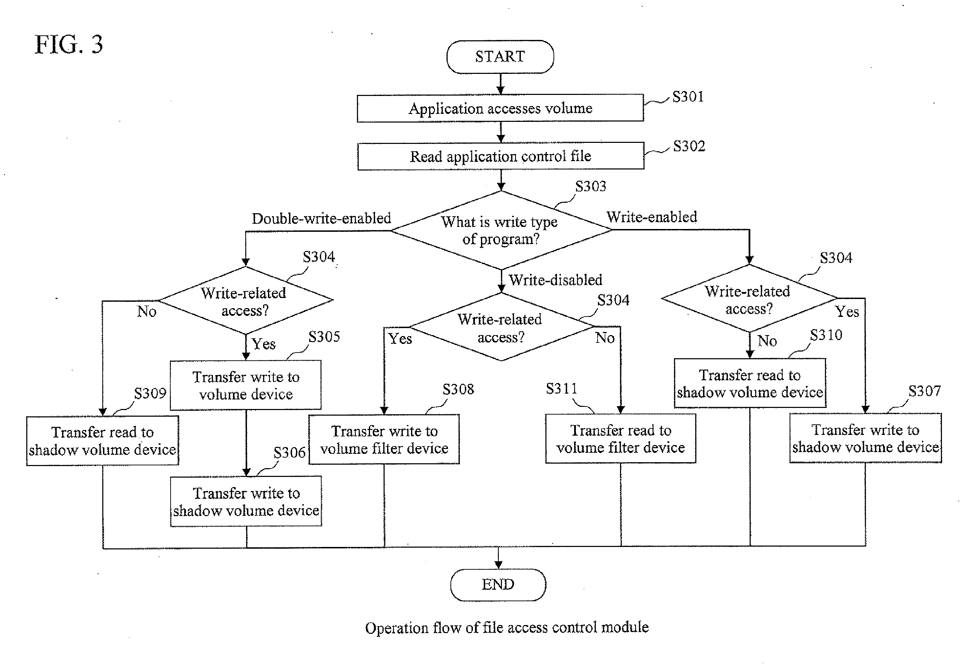

FIG. 3 is a flowchart for explaining processing operations of the file access control module 106.

First, if the application 105 has accessed the volume device 215, the file access control module 106 senses the access (step S301).

The file access control module 106 reads the application control file 206 (step S302), inquires of the OS for the process name of a process requester and obtains the process name of the process requester, compares the process name of the process requester with the process name corresponding to the application name of the list, obtains the write flag 704 and the doubled flag 705 of a matching entry, and determines whether the process is write-enabled/disabled and whether the process is double-write-enabled/disabled (step S303). At this time, the file access control module 106 determines whether or not the request is a write-related request (step S304). It should be noted that the write-related request refers to a so-called request in which the write to the secondary storage device occurs. For example, in addition to the write request, a request for changing an attribute of the file or the like is also included in the write-related request.

In the case of the write request, if the write flag 704 is "TRUE" and the double-write flag 705 is "TRUE", the process is a "double-write-enabled process", and the file access control module 106 transfers the write-related request to the volume device 215 (step S305). Subsequently, furthermore, the file access control module 106 also writes the same data to the shadow volume device 213 (step S306), and then the process is terminated.

Moreover, in the case of the write request, if the write flag 704 is "TRUE" and the double-write flag 705 is "FALSE", the process is a "write-enabled process", and the file access control module 106 transfers the write-related request to the shadow volume device 213 (step S307), and then the process is terminated.

On the other hand, in the case of the write request, if the write flag 704 is judged as "FALSE" in step S304 (in this case, the doubled flag 705 is naturally "FALSE"), the process is a "write-disabled process", and the file access control module 106 transfers the write-related request to the volume filter device 212 (step S308), and then the process is terminated.

Furthermore, in the case of a request other than the write request, if the write flag 704 is "TRUE" and the double-write flag 705 is "TRUE", the process is the "double-write-enabled process", and the file access control module 106 transfers a read request to the shadow volume device 213 (step S309), and then the process is terminated. Here, the reason why this process is performed for the shadow volume device 213 instead of the volume device 215 is because data which is finally applied to the secondary storage device 110 is the data cached in the shadow volume device 213. If the read request from the "double-write-enabled process" has been transferred to the volume filter device 212 and the data has been read, the data cached in the volume filter device 212 and the data cached in the shadow volume device 213 are mixed after the restart, and system crash can occur due to data inconsistency.

In the case of the request other than the write request, if the write flag 704 is "TRUE" and the double-write flag 705 is "FALSE", the process is the "write-enabled process", and the file access control module 106 transfers the read request to the shadow volume device 213 (step S310), and then the process is terminated.

In the case of the request other than the write request, if the write flag 704 is judged as "FALSE" in step S304 (in this case, the doubled flag 705 is naturally "FALSE"), the request is from the "write-disabled" application, and the file access control module 106 transfers the read request to the volume filter device 212 (step S311), and then the process is terminated.

As described above, the data can be separated between the case of the write-enabled process and the case of the write-disabled process. Hence, a more secure system can be provided.

### <Operations of Write control Module>

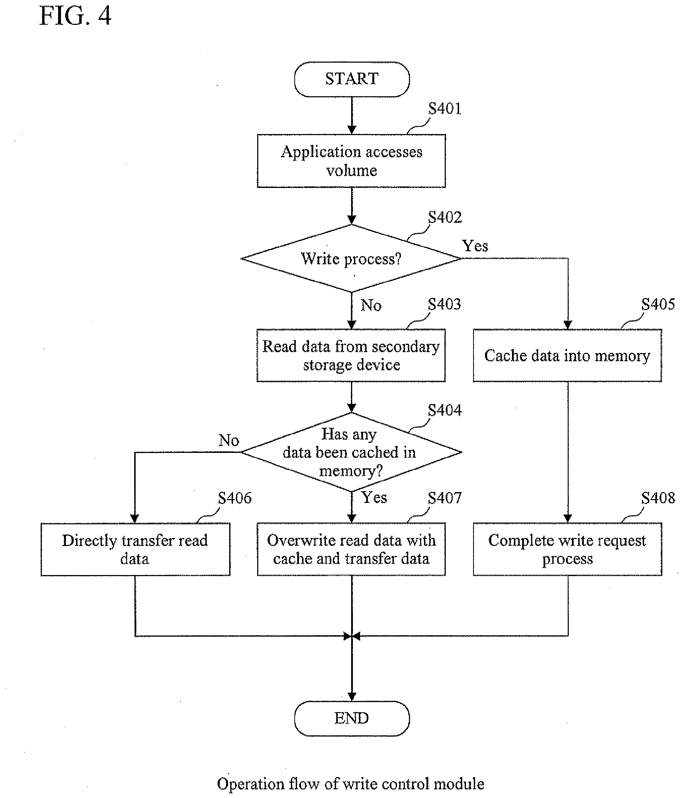

FIG. 4 is a flowchart for explaining processing operations of the volume filter device 212 and the shadow volume device 213 in the write control module 107. While read and write processing operations are basically the same in the volume filter device 212 and the shadow volume device 213, descriptions thereof are slightly different and thus will be separately described.
i) First, the processing operations of the volume filter device 212 will be described. When the access to the volume device 215 (the secondary storage device 110) by the application 105 is sensed (step S401), the volume filter device 212 determines whether or not the request is the write-related request (step S402).
   In the case of a write-related process, the volume filter device 212 caches the written data into an area reserved on the memory 217 (step S405), and the process is completed (step S408). It should be noted that, in an ordinary PC without write control, this write request is transferred to the volume filter device 212, and written to the secondary storage device 110.
   In the case of a process other than the write-related process (here, while the description is limited to a read process, it is conceivable that the other processes are also included), the volume filter device 212 reads the data from the volume device 215 (the secondary storage device 110) (step S403).
   Subsequently, the volume filter device 212 determines whether or not any data has been cached in the memory 217 (step S404), and if no cache exists, the read data is directly returned to the application (step S406). If the cached data exists, the volume filter device 212 overwrites the read data with the cache, and returns the data to the application (step S407).
ii) Next, the processing operations of the shadow volume device 213 in the write control module 107 will be described. The processing operations of the shadow volume device 213 will be also described by using the flowchart of FIG. 4.

When the access to the shadow volume device 213 by the application 105 (accurately, the access requested by the file access control module 106) is sensed (step S401), the shadow volume device 213 determines whether or not the request is the write-related request (step S402). It should be noted that the access request to the shadow volume device 213 is not the access which is directly performed by the application 105. While the application 105 attempts to access the volume filter device 212, the file access control module 106 redirects the process to the shadow volume device 213 depending on a type of the application.

In the case of the write-related process, the shadow volume device 213 caches the written data into an area reserved on the memory 217 (step S405), and the process is completed (step S408). It should be noted that the data cached in the shadow volume device 213 and the data cached in the volume filter device 212 are the data cached in separate areas.

In the case of the process other than the write-related process (here, while the description is limited to the read process, it is conceivable that the other processes are also included), the shadow volume device 213 reads the data from the volume device 215 (the secondary storage device 110) (step S403). While the volume filter device 212 and the shadow volume device 213 perform only the write process and the read process, the file system filter device 205 also performs the process other than the write-related process, for example, creating the file, closing the file, changing file information and the like.

Subsequently, the shadow volume device 213 determines whether or not any data has been cached in the memory 217 (step S404), and if no cache exists, the read data is directly returned to the application (step S406). If the cached data exists, the shadow volume device 213 overwrites the read data with the cache, and returns the data to the application (step S407).

### <Operations When User Terminal Is Started>

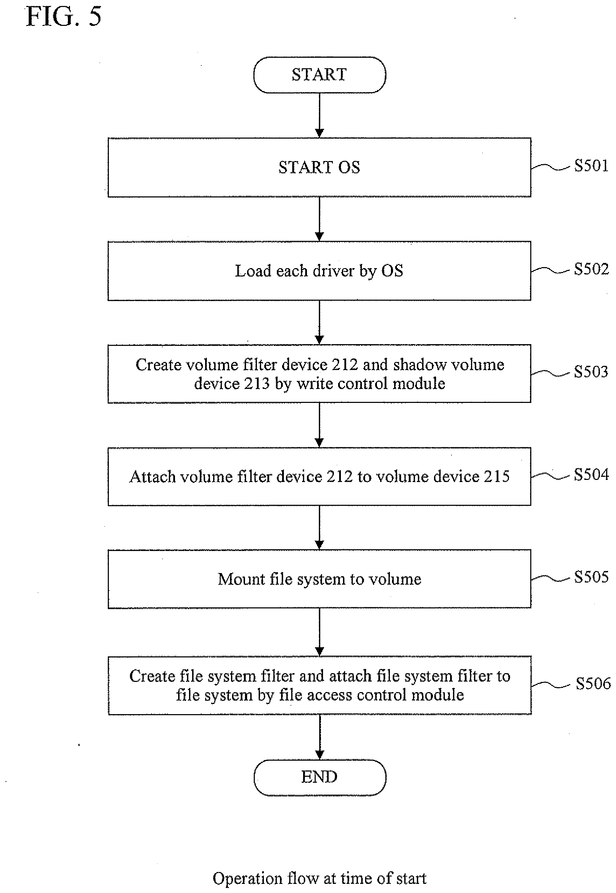

FIG. 5 is a flowchart for explaining processing operations when the user terminal 101 is started.

First, when the user starts the user terminal 101, the OS 104 starts (step S501), and the OS 104 loads each module into the system (step S502).

Next, the write control module 107 reads the defined function (the I/O create function) of the OS, and creates the volume filter device 212 and the shadow volume device 213 (step S503). Moreover, the volume filter device 212 is attached (caused to correspond) to the volume device 215 (step S504). This attachment enables the I/O request in the case where the application 105 accesses the secondary storage device 110, to be obtained by the volume filter device 212. On the other hand, since the shadow volume device 213 is not attached to any device, the application 105 cannot send the I/O request to the shadow volume device 213. Therefore, the shadow volume device 213 cannot obtain the I/O request unless the file system filter device 205 purposely sends the I/O request to the shadow volume device 213.

Subsequently, the OS 104 mounts the file system 210, for example, NTFS, FAT or the like, to the volume device 215 (step S505). Finally, the file access control module 106 creates the file system filter device 205, and attaches the file system filter device 205 to the file system 210 (step S506). Thereby, a file process to the volume filter device 212 can be obtained by the file system filter device 205, and the file process can be sorted.

### <Operations When User Terminal Is Shut Down>

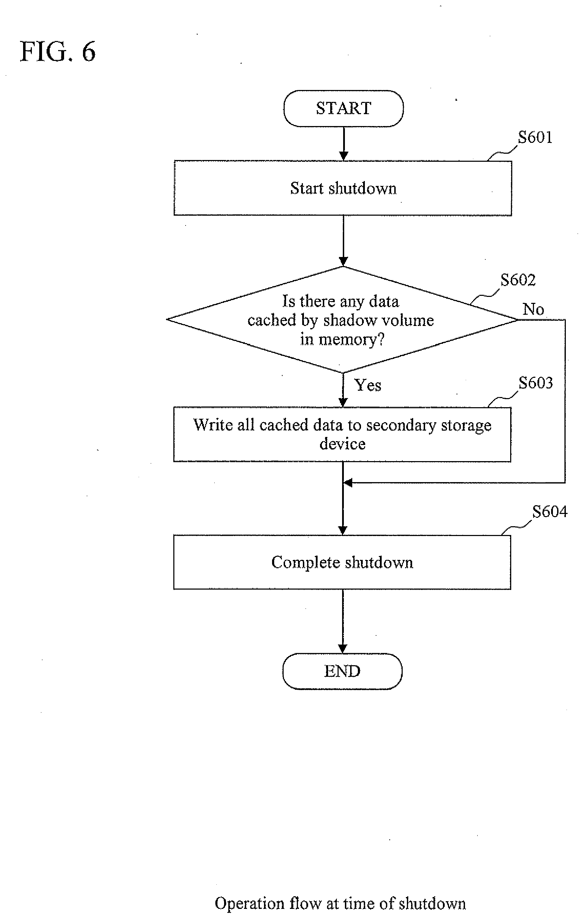

FIG. 6 is a flowchart for explaining processing operations when the user terminal 101 is shut down.

First, when the shutdown of the user terminal 101 is started (step S601), the shadow volume device 213 checks whether or not there is any data cached in the memory 217 by the shadow volume itself (step S602). If the cached data exists, the shadow volume device 213 writes the cached data to the secondary storage device 110 via the volume device 215 (step S603). For the data cached by the volume filter device, since the data is not written to the secondary storage device, a write operation is not particularly performed, and the data is directly volatilized by the shutdown. When the above operation is terminated, the user terminal 101 is shut down (step S604).

### <Example of Application Control File>

FIG. 7 is a diagram showing a specific example of the application control file. According to FIG. 7, for example, an application having a risk of the leakage of the information, such as a system file of the OS or the like, or Document Creator, corresponds to the application which can issue the write-disabled process. Moreover, the application which can issue the double-write-enabled process is system revision data such as an OS patch as described above, and an in-house management tool or the like corresponds to the application which can issue the write-enabled process.

### <Summary>

In the present invention, if the I/O request from the application is the double-write-enabled process and is the write request, the above described I/O request is transferred to the volume filter device and the shadow volume device. Then, both the volume filter device and the shadow volume device write the data corresponding to the I/O request, into the cache memory (different portions in the memory). It should be noted that examples of the application which issues the I/O request that is the double-write-enabled process include the system revision data including the OS patch. In this way, the system revision data such as the OS patch can be enabled for all the processes including the write-enabled process and the write-disabled process, in real time. In other words, as described in the embodiment, if the I/O request from the application which can issue the write-enabled process is the read request, the system revision data such as the OS patch can be read from the memory via the shadow volume device. Moreover, if the I/O request from the application which only issues the write-disabled process is the read request, the system revision data can be read from the memory via the volume filter device. Hence, the system revision data can be read by all the processes in real time without restarting the user terminal.

When the user terminal apparatus is shut down, the shadow volume device writes the system revision data written to the cache memory, into the secondary storage device. Thereby, the system revision data can be finally reflected in the user terminal apparatus. In other words, if the user terminal is restarted, the system revision data such as the OS patch is reflected in the OS.

Examples of the application which issues the I/O that is the above described write-disabled process include the application program which creates and edits the confidential data.

Moreover, as described above, during a period from when the user terminal apparatus (PC) is started until when the user terminal apparatus (PC) is shut down, the file, for example, such as setting or configuration data unique to the application, can be isolated between the write-enabled process and the write-disabled process, and thus the data can be securely managed.

It should be noted that the present invention can also be realized by a program code of software which realizes the functions of the embodiment. In this case, a system or an apparatus is supplied with a storage medium in which the program code is recorded, and a computer (or a CPU or an MPU) of the system or the apparatus reads the program code stored in the storage medium. In this case, the program code itself read from the storage medium realizes the functions of the above described embodiment, and hence the program code itself and the storage medium in which the program code is stored constitute the present invention. As the storage medium for supplying such a program code, for example, a flexible disk, a CD-ROM, a DVD-ROM, a hard disk, an optical disk, a magnetic-optical disk, a CD-R, a magnetic tape, a nonvolatile memory card, a ROM or the like is used.

Moreover, the functions of the above described embodiment may be realized by causing an OS (operating system) or the like which operates on the computer, to perform a part or all of actual processes based on instructions of the program code. Furthermore, the functions of the above described embodiment may be realized by writing the program code read from the storage medium into a memory on the computer, and then causing a CPU or the like of the computer to perform a part or all of the actual processes based on the instructions of the program code.

Moreover, the program code of the software which realizes the functions of the embodiment may be stored in a storage section such as a hard disk or a memory of the system or the apparatus, or in a storage medium such as a CD-RW or a CD-R, by delivering the program code via a network. When the program code is used, the computer (or the CPU or the MPU) of the system or the apparatus may read and execute the program code stored in the storage section or the storage medium.

## Claims

1. A user terminal apparatus (101) which constitutes a part of a thin client system which transfers data to a file server (102) and stores the data therein, comprising:
a secondary storage device (110);
a cache memory (217);
a file access control unit (106) adapted to judge a class of an I/O request to the secondary storage device (110) from an application (105); and
first and second redirection processing units (212, 213) adapted to redirect the I/O request,
**characterized in that**, if the file access control unit (106) judges that the I/O request from the application (105) is a double-write-enabled process and is a write request, the file access control unit (106) transfers the I/O request to the first and second redirection processing units (212, 213), wherein the application of the double-write-enabled process realizes at least one of system revision data, an OS update or an application software update, and
the first and second redirection processing units (212, 213) write data corresponding to the I/O request into different portions in the cache memory (217), respectively; and
if the file access control unit (106) judges that the I/O request from the application (105) is not the double-write-enabled process but a write-enabled process, and is the write request, the file access control unit (106) transfers the I/O request to the second redirection processing unit (213), and
only the second redirection processing unit (213) writes data corresponding to the I/O request which is the write-enabled process and is the write request, into the cache memory (217);
wherein when the user terminal apparatus (101) is shut down, the second redirection processing unit (213) writes the data written to the cache memory (217) by the second redirection processing unit (213), into the secondary storage device (110); and
if the file access control unit (106) judges that the I/O request from the application (105) is a write-disabled process and is the write request, the file access control unit (106) transfers the I/O request to the first redirection processing unit (212), and
only the first redirection processing unit (212) writes data corresponding to the I/O request which is the write-disabled process and is the write request, into the cache memory (217).

2. The user terminal apparatus (101) according to claim 1, wherein
if the file access control unit (106) judges that the I/O request from the application is not the double-write-enabled process but the write-enabled process, and is a request other than the write request, the file access control unit transfers the I/O request to the second redirection processing unit (213), and
the second redirection processing unit (213) reads data corresponding to the I/O request which is the write-enabled process and is the request other than the write request, from the cache memory (217).

3. The user terminal apparatus (101) according to claim 1 or 2, wherein
if the file access control unit (106) judges that the I/O request from the application (105) is the write-disabled process and is a request other than the write request, the file access control unit (106) transfers the I/O request to the first redirection processing unit (212), and
the first redirection processing unit (212) reads data corresponding to the I/O request which is the write-disabled process and is the request other than the write request, from the cache memory (217).

4. The user terminal apparatus (101) according to any of the preceding claims, wherein the application which issues the I/O request that is the write-disabled process is an application program which creates and edits confidential data.

5. The user terminal apparatus (101) according to one of the preceding claims, wherein
if the file access control unit (106) judges that the I/O request from the application (105) is the double-write-enabled process, and is a request other than the write request, the file access control unit (106) transfers the I/O request to the second redirection processing unit (213), and
the second redirection processing unit (213) reads data corresponding to the I/O request, from the cache memory (217).

6. A control method for a user terminal apparatus (101) which constitutes a part of a thin client system which transfers data to a file server (102) and stores the data therein, wherein
the user terminal apparatus comprises a secondary storage device (110), a cache memory (217), a file access control unit (106) which judges a class of an I/O request to the secondary storage device (110) from an application (105), and first and second redirection processing units (212, 213) which redirect the I/O request,
**characterized in that** the control method comprises:
if the file access control unit (106) judges that the I/O request from the application (105) is a double-write-enabled process and is a write request, transferring the I/O request to the first and second redirection processing units (212, 213) by the file access control unit (106), wherein the application of the double-write-enabled process realizes at least one of system revision data, an OS update or an application software update, and
writing data corresponding to the I/O request, into different portions in the cache memory (217) by the first and second redirection processing units (212, 213), respectively;
if the file access control unit (106) judges that the I/O request from the application (105) is not the double-write-enabled process but a write-enabled process, and is the write request, transferring the I/O request to the second redirection processing unit (213), and
writing data corresponding to the I/O request which is the write-disabled process and is the write request, into the cache memory (217) by only the second redirection processing unit (213);
when the user terminal apparatus is shut down, writing the data written to the cache memory (217) by the second redirection processing unit (213), into the secondary storage device (110) by the second redirection processing unit (213);
if the file access control unit (106) judges that the I/O request from the application (105) is a write-disabled process and is the write request, transferring the I/O request to the first redirection processing unit (212), and
writing data corresponding to the I/O request which is the write-disabled process and is the write request, into the cache memory (217) by only the first redirection processing unit (212).

7. The control method according to claim 6, further comprising:
if the file access control unit (106) judges that the I/O request from the application (105) is the double-write-enabled process, and is a request other than the write request, transferring the I/O request to the second redirection processing unit (213) by the file access control unit (106), and
reading data corresponding to the I/O request, from the cache memory (217) by the second redirection processing unit (213).

8. A program which causes a computer to implement the method according to one of claims 6 or 7.

## Patentansprüche

1. Nutzerendgerätvorrichtung (101), welche einen Teil eines Thin-Client-Systems darstellt, welches Daten an einen Daten-Server (102) überträgt und die Daten darin speichert, umfassend:
eine sekundäre Speichervorrichtung (110);
einen Cache-Speicher (217);
eine Dateizugriffsteuerungseinheit (106), welche dazu eingerichtet ist, eine Klasse einer Eingabe/Ausgabe-Anfrage an die sekundäre Speichereinrichtung (110) von einer Anwendung (105) zu beurteilen; und
erste und zweite Umleitungsverarbeitungseinheiten (212, 213), welche dazu eingerichtet sind, die Eingabe/Ausgabe-Anfrage umzuleiten;
**dadurch gekennzeichnet, dass** für den Fall, dass die Dateizugriffssteuerungseinheit (106) beurteilt, dass die Eingabe/Ausgabe-Abfrage von der Anwendung (105) ein doppel-schreib-aktiver Prozess ist und eine Schreib-Anfrage ist, die Dateizugriffsteuerungseinheit (106) die Eingabe/Ausgabe-Anfrage an die ersten und zweiten Umleitungsverarbeitungseinheiten (212, 213) weiterleitet, wobei die Anwendung des doppel-schreib-aktiven Prozesses Systemrevisionsdaten und/oder eine Betriebssystem-Aktualisierung und/oder eine Aktualisierung von Anwendungssoftware realisiert, und
die ersten und zweiten Umleitungsverarbeitungseinheiten (212, 213) Daten, welche der Eingabe/Ausgabe-Anfrage entsprechen, in unterschiedliche Bereiche des Cache-Speichers (217) schreiben; und
falls die Dateizugriffssteuerungseinheit (106) beurteilt, dass die Eingabe/Ausgabe-Anfrage von der Anwendung (105) nicht der doppel-schreib-aktive Prozess, sondern ein schreibaktiver Prozess ist und die Schreib-Anfrage darstellt, die Dateizugriffssteuerungseinheit (106) die Eingabe/Ausgabe-Anfrage an die zweite Umleitungsverarbeitungseinheit (213) überträgt; und
nur die zweite Umleitungsverarbeitungseinheit (213) Daten, welche der Eingabe/Ausgabe-Anfrage, die der schreibaktive Prozess und die Schreib-Anfrage ist, entsprechen, in den Cache-Speicher (217) schreibt;
wobei, wenn die Nutzerendgerätvorrichtung (101) heruntergefahren wird, die zweite Umleitungsverarbeitungseinheit (213) die Daten, welche von der zweiten Umleitungsverarbeitungseinheit (213) in den Cache-Speicher (217) geschrieben wurden, in die sekundäre Speichervorrichtung (110) schreibt; und
falls die Dateizugriffssteuerungseinheit (106) beurteilt, dass die Eingabe/Ausgabe-Anfrage von der Anwendung (105) ein schreib-inaktiver Prozess ist und die Schreib-Anfrage ist, die Dateizugriffssteuerungseinheit (106) die Eingabe/Ausgabe-Anfrage an die erste Umleitungsverarbeitungseinheit (212) überträgt und nur die erste Umleitungsverarbeitungseinheit (212) Daten, welche der Eingabe/Ausgabe-Anfrage, die der schreib-inaktive Prozess ist und die Schreib-Anfrage ist, entsprechen, in den Cache-Speicher (217) schreibt.

2. Nutzerendgerätvorrichtung (101) nach Anspruch 1, wobei:
falls die Dateizugriffssteuerungseinheit (106) beurteilt, dass die Eingabe/Ausgabe-Anfrage von der Anwendung nicht der doppel-schreib-aktive Prozess, sondern der schreibaktive Prozess ist und eine von der Schreib-Anfrage verschiedene Anfrage ist, die Dateizugriffssteuerungseinheit die Eingabe/Ausgabe-Anfrage an die zweite Umleitungsverarbeitungseinheit (213) überträgt; und
die zweite Umleitungsverarbeitungseinheit (213) Daten, welche der Eingabe/Ausgabe-Anfrage, die der schreibaktive Prozess und die von der Schreib-Anfrage verschiedene Anfrage ist, entsprechen, aus dem Cache-Speicher (217) liest.

3. Nutzerendgerätvorrichtung (101) nach Anspruch 1 oder 2, wobei:
falls die Dateizugriffssteuerungseinheit (106) beurteilt, dass die Eingabe/Ausgabe-Anfrage von der Anwendung (105) der schreibinaktive Prozess und eine von der Schreib-Anfrage verschiedene Anfrage ist, die Dateizugriffssteuerungseinheit (106) die Eingabe/Ausgabe-Anfrage an die erste Umleitungsverarbeitungseinheit (212) überträgt und
die erste Umverteilungsverarbeitungseinheit (212) Daten, welche der Eingabe/Ausgabe-Anfrage, die der schreib-inaktive Prozess und die von der Schreib-Anfrage verschiedene Anfrage ist, entsprechen, aus dem Cache-Speicher (217) liest.

4. Nutzerendgerätvorrichtung (101) nach einem der vorangehenden Ansprüche, wobei die Anwendung, welche die Eingabe/Ausgabe-Anfrage, die der schreibinaktive Prozess ist, ausgibt, ein Anwendungsprogramm ist, welches vertrauliche Daten erzeugt und editiert.

5. Nutzerendgerätvorrichtung (101) nach einem der vorangehenden Ansprüche, wobei, falls die Dateizugriffssteuerungseinheit (106) beurteilt, dass die Eingabe/Ausgabe-Anfrage von der Anwendung (105) der doppel-schreib-aktive Prozess ist und eine von der Schreib-Anfrage verschiedene Anfrage ist, die Dateizugriffssteuerungseinheit (106) die Eingabe/Ausgabe-Anfrage an die zweite Umleitungsverarbeitungseinheit (213) überträgt; und
die zweite Umleitungsverarbeitungseinheit (213) Daten, welche der Eingabe/Ausgabe-Anfrage entsprechen, aus dem Cache-Speicher (217) liest.

6. Steuerungsverfahren für eine Nutzerendgerätvorrichtung (101), welche einen Teil eines Thin-Client-Systems darstellt, welches Daten an einen Daten-Server (102) überträgt und die Daten darin speichert, wobei:
die Nutzerendgerätvorrichtung eine sekundäre Speichervorrichtung (110), einen Cache-Speicher (217), eine Dateizugriffsteuerungseinheit (106), welche eine Klasse einer Eingabe/Ausgabe-Anfrage an die sekundäre Speichervorrichtung (110) von einer Anwendung (105) beurteilt, und erste und zweite Umleitungsverarbeitungseinheiten (212, 213), welche die Eingabe/Ausgabe-Anfrage umleiten, umfasst;
**dadurch gekennzeichnet, dass** das Steuerungsverfahren umfasst:
falls die Dateizugriffssteuerungseinheit (106) beurteilt, dass die Eingabe/Ausgabe-Anfrage von der Anwendung (105) ein doppel-schreib-aktiver Prozess ist und eine Schreib-Anfrage ist, Übertragen der Eingabe/Ausgabe-Anfrage an die erste und zweite Umleitungsverarbeitungseinheit (212, 213) mittels der Dateizugriffssteuerungseinheit (106), wobei die Anwendung des doppel-schreib-aktiven Prozesses Systemrevisionsdaten und/oder eine Betriebssystem-Aktualisierung und/oder eine Anwendungssoftware-Aktualisierung realisiert; und
Schreiben von der Eingabe/Ausgabe-Anfrage entsprechenden Daten in unterschiedliche Abschnitte in dem Cache-Speicher (217) mittels der ersten bzw. zweiten Umleitungsverarbeitungseinheit (212, 213);
falls die Dateizugriffssteuerungseinheit (106) beurteilt, dass die Eingabe/Ausgabe-Anfrage von der Anwendung (105) nicht der doppel-schreib-aktive Prozess, sondern ein schreibaktiver Prozess ist und die Schreib-Anfrage ist, Übertragen der Eingabe/Ausgabe-Anfrage an die zweite Umleitungsverarbeitungseinheit (213); und
Schreiben von Daten, welche der Eingabe/Ausgabe-Anfrage, die der schreibinaktive Prozess und die Schreib-Anfrage ist, entsprechen, in den Cache-Speicher (217) mittels nur der zweiten Umleitungsverarbeitungseinheit (213);
wenn die Nutzerendgerätvorrichtung heruntergefahren wird, Schreiben der mittels der zweiten Umleitungsverarbeitungseinheit (213) in den Cache-Speicher (217) geschriebenen Daten in die sekundäre Speichervorrichtung (110) mittels der zweiten Umleitungsverarbeitungseinheit (213);
falls die Dateizugriffssteuerungseinheit (106) beurteilt, dass die Eingabe/Ausgabe-Anfrage von der Anwendung (105) ein schreib-inaktiver Prozess ist und die Schreib-Anfrage ist, Übertragen der Eingabe/Ausgabe-Anfrage an die erste Umleitungsverarbeitungseinheit (212); und
Schreiben von Daten, welche der Eingabe/Ausgabe-Anfrage, die der schreibinaktive Prozess ist und die Schreib-Anfrage ist, entsprechen, in den Cache-Speicher (217) mittels nur der ersten Umleitungsverarbeitungseinheit (212).

7. Steuerungsverfahren nach Anspruch 6, ferner umfassend:
falls die Dateizugriffssteuerungseinheit (106) beurteilt, dass die Eingabe/Ausgabe-Anfrage von der Anwendung (105) der doppel-schreib-aktive Prozess ist und eine von der Schreib-Anfrage verschiedene Anfrage ist, Übertragen der Eingabe/Ausgabe-Anfrage an die zweite Umleitungsverarbeitungseinheit (213) mittels der Dateizugriffssteuerungseinheit (106); und
Lesen von der Eingabe/Ausgabe-Anfrage entsprechenden Daten aus dem Cache-Speicher (217) mittels der zweiten Umleitungsverarbeitungseinheit (213).

8. Programm, welches einen Rechner dazu bestimmt, das Verfahren nach einem der Ansprüche 6 oder 7 auszuführen.

## Revendications

1. Appareil terminal d'utilisateur (101) qui constitue une partie d'un système client léger lequel transfère des données à un serveur de fichiers (102) et stocke les données dans celui-ci, comprenant :
un dispositif de stockage auxiliaire (110) ;
une mémoire cache (217) ;
une unité de commande d'accès aux fichiers (106) apte à déterminer une classe d'une demande d'entrée/sortie, I/O, au niveau du dispositif de stockage auxiliaire (110), en provenance d'une application (105) ; et
des première et seconde unités de traitement de redirection (212, 213) aptes à rediriger la demande I/O,
**caractérisé en ce que**, si l'unité de commande d'accès aux fichiers (106) détermine que la demande I/O en provenance de l'application (105) correspond à un processus de double écriture actif et à une demande d'écriture, l'unité de commande d'accès aux fichiers (106) transfère la demande I/O vers les première et seconde unités de traitement de redirection (212, 213), dans lequel l'application du processus de double écriture actif met en oeuvre au moins l'une parmi une mise à jour de données de révision de système, une mise à jour de système d'exploitation, OS, ou une mise à jour de logiciel d'application ; et
les première et seconde unités de traitement de redirection (212, 213) écrivent des données correspondant à la demande I/O dans différentes parties dans la mémoire cache (217), respectivement ; et, si l'unité de commande d'accès aux fichiers (106) détermine que la demande I/O en provenance de l'application (105) ne correspond pas au processus de double écriture actif mais à un processus d'écriture actif et qu'elle correspond à la demande d'écriture, l'unité de commande d'accès aux fichiers (106) transfère la demande I/O à la seconde unité de traitement de redirection (213) ; et
seule la seconde unité de traitement de redirection (213) écrit des données correspondant à la demande I/O, qui correspond au processus d'écriture actif et à la demande d'écriture, dans la mémoire cache (217) ;
dans lequel, lorsque l'appareil terminal d'utilisateur (101) est hors tension, la seconde unité de traitement de redirection (213) écrit les données, écrites sur la mémoire cache (217) par la seconde unité de traitement de redirection (213), dans le dispositif de stockage auxiliaire (110) ; et
si l'unité de commande d'accès aux fichiers (106) détermine que la demande I/O en provenance de l'application (105) correspond à un processus d'écriture inactif et correspond à la demande d'écriture, l'unité de commande d'accès aux fichiers (106) transfère la demande I/O à la première unité de traitement de redirection (212) ; et
seule la première unité de traitement de redirection (212) écrit des données correspondant à la demande I/O, qui correspond au processus d'écriture inactif et à la demande d'écriture, dans la mémoire cache (217).

2. Appareil terminal d'utilisateur (101) selon la revendication 1, dans lequel :
si l'unité de commande d'accès aux fichiers (106) détermine que la demande I/O en provenance de l'application ne correspond pas au processus de double écriture actif mais au processus d'écriture actif, et qu'elle correspond à une demande distincte de la demande d'écriture, l'unité de commande d'accès aux fichiers transfère la demande I/O à la seconde unité de traitement de redirection (213) ; et
la seconde unité de traitement de redirection (213) lit des données correspondant à la demande I/O qui correspond au processus d'écriture actif et à la demande distincte de la demande d'écriture, à partir de la mémoire cache (217).

3. Appareil terminal d'utilisateur (101) selon la revendication 1 ou 2, dans lequel :
si l'unité de commande d'accès aux fichiers (106) détermine que la demande I/O en provenance de l'application (105) correspond au processus d'écriture inactif et à une demande distincte de la demande d'écriture, l'unité de commande d'accès aux fichiers (106) transfère la demande I/O à la première unité de traitement de redirection (212) ; et
la première unité de traitement de redirection (212) lit des données correspondant à la demande I/O qui correspond au processus d'écriture inactif et à une demande distincte de la demande d'écriture, à partir de la mémoire cache (217).

4. Appareil terminal d'utilisateur (101) selon l'une quelconque des revendications précédentes, dans lequel l'application qui émet la demande I/O qui correspond au processus d'écriture inactif est un programme d'application qui crée et modifie des données confidentielles.

5. Appareil terminal d'utilisateur (101) selon l'une quelconque des revendications précédentes, dans lequel, si l'unité de commande d'accès aux fichiers (106) détermine que la demande I/O en provenance de l'application (105) correspond au processus de double écriture actif, et correspond à une demande distincte de la demande d'écriture, l'unité de commande d'accès aux fichiers (106) transfère la demande I/O à la seconde unité de traitement de redirection (213) ; et
la seconde unité de traitement de redirection (213) lit des données correspondant à la demande I/O, à partir de la mémoire cache (217).

6. Procédé de commande pour un appareil terminal d'utilisateur (101) qui constitue une partie d'un système client léger qui transfère des données à un serveur de fichiers (102) et stocke les données dans celui-ci, dans lequel
l'appareil terminal d'utilisateur comprend un dispositif de stockage auxiliaire (110), une mémoire cache (217), une unité de commande d'accès aux fichiers (106) qui détermine une classe d'une demande d'entrée/sortie, I/O, au niveau du dispositif de stockage auxiliaire (110), en provenance d'une application (105), et des première et seconde unités de traitement de redirection (212, 213) qui redirigent la demande I/O,
**caractérisé en ce que** le procédé de commande comporte les étapes ci-dessous consistant à :
si l'unité de commande d'accès aux fichiers (106) détermine que la demande I/O en provenance de l'application (105) correspond à un processus de double écriture actif et à une demande d'écriture, transférer la demande I/O aux première et seconde unités de traitement de redirection (212, 213), par le biais de l'unité de commande d'accès aux fichiers (106), dans lequel l'application du processus de double écriture actif met en oeuvre au moins l'une parmi une mise à jour de données de révision de système, une mise à jour de système d'exploitation, OS, ou une mise à jour de logiciel d'application, et
écrire des données correspondant à la demande I/O, dans différentes parties de la mémoire cache (217), par le biais des première et seconde unités de traitement de redirection (212, 213), respectivement ;
si l'unité de commande d'accès aux fichiers (106) détermine que la demande I/O en provenance de l'application (105) ne correspond pas au processus de double écriture actif, mais à un processus d'écriture actif et qu'elle correspond à la demande d'écriture, transférer la demande I/O à la seconde unité de traitement de redirection (213) ; et
écrire des données correspondant à la demande I/O qui correspond au processus d'écriture inactif et à la demande d'écriture, dans la mémoire cache (217), uniquement par le biais de la seconde unité de traitement de redirection (213) ;
lorsque l'appareil terminal d'utilisateur est hors tension, écrire les données, écrites sur la mémoire cache (217) par la seconde unité de traitement de redirection (213), dans le dispositif de stockage auxiliaire (110), par le biais de la seconde unité de traitement de redirection (213) ;
si l'unité de commande d'accès aux fichiers (106) détermine que la demande I/O en provenance de l'application (105) correspond à un processus d'écriture inactif et à la demande d'écriture, transférer la demande I/O à la première unité de traitement de redirection (212) ; et
écrire des données correspondant à la demande I/O qui correspond au processus d'écriture inactif et à la demande d'écriture, dans la mémoire cache (217), uniquement par le biais de la première unité de traitement de redirection (212).

7. Procédé de commande selon la revendication 6, comprenant en outre les étapes ci-dessous consistant à :
si l'unité de commande d'accès aux fichiers (106) détermine que la demande I/O en provenance de l'application (105) correspond au processus de double écriture actif et à une demande distincte de la demande d'écriture, transférer la demande I/O à la seconde unité de traitement de redirection (213) par le biais de l'unité de commande d'accès aux fichiers (106) ; et
lire des données correspondant à la demande I/O, à partir de la mémoire cache (217), par le biais de la seconde unité de traitement de redirection (213).

8. Programme amenant un ordinateur à mettre en oeuvre le procédé selon l'une quelconque des revendications 6 et 7.
